(19) Europäisches Patentamt
European Patent Office
Office européen des brevets

(11) EP 4 687 181 A1

(12) EUROPEAN PATENT APPLICATION

(43) Date of publication:
**04.02.2026 Bulletin 2026/06**

(21) Application number: **25189616.3**

(22) Date of filing: **15.07.2025**

(51) International Patent Classification (IPC):
***H01M 4/134*** *(2010.01)* ***H01M 4/38*** *(2006.01)*

(52) Cooperative Patent Classification (CPC):
**H01M 4/134; H01M 4/386;** H01M 4/622; H01M 4/625; H01M 2004/027; H01M 2300/0065

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024 JP 2024123378**

(71) Applicant: **TOYOTA JIDOSHA KABUSHIKI KAISHA**
**Toyota-shi, Aichi-ken 471-8571 (JP)**

(72) Inventors:
- **OTAKI, Mitsutoshi**
  **Toyota-shi, Aichi-ken,, 471-8571 (JP)**
- **VISBALMENDOZA, Heidyhodex**
  **Toyota-shi, Aichi-ken,, 471-8571 (JP)**

(74) Representative: **Winter, Brandl - Partnerschaft mbB**
**Alois-Steinecker-Straße 22**
**85354 Freising (DE)**

# (54) ELECTRODE LAYER AND BATTERY

(57) A main object of the present disclosure is to provide an electrode layer of which resistance increase due to charge and discharge is little. The present disclosure achieves the object by providing an electrode layer including an electrode active material including a Si element, and a binder including an unsaturated bond, wherein when the binder is dyed by Os dyeing and then an overlapping degree D of the Si element and the Os element is calculated based on an element mapping image obtained by a SEM-EDX measurement, the D is larger than 0.047.

FIG. 1

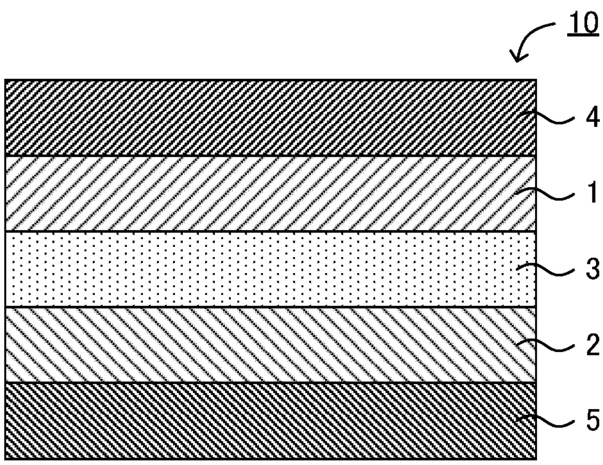




Processed by Luminess, 75001 PARIS (FR)

## Description

Technical Field

The present disclosure relates to an electrode layer and a battery.

Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. Also, as an electrode active material used for a battery, a Si (silicon) has been known. For example, Patent Literature 1 discloses an active material including Si and a void inside a primary particle.

Citation List

Patent Literature

Patent Literature 1: Japanese Patent Application Laid-Open (JP-A) No. 2023-167083

Summary of Disclosure

Technical Problem

The theoretical capacity of an electrode active material including a Si element is large and it is advantageous to allow a battery to have high energy density. On the other hand, the volume change of the electrode active material including a Si element due to charge and discharge is large. When the volume change due to charge and discharge is large, when charge and discharge are repeated, the electrode active material and the other substance (such as a solid electrolyte or a conductive material) that contacts the electrode active material easily peel off. As a result, the battery resistance easily increases.

The present disclosure has been made in view of the above circumstances, and a main object thereof is to provide an electrode layer of which resistance increase due to charge and discharge is little.

Solution to Problem

[1] An electrode layer comprising an electrode active material including a Si element, and a binder including an unsaturated bond, wherein when the binder is dyed by Os dyeing and then an overlapping degree D of the Si element and the Os element is calculated based on an element mapping image obtained by a SEM-EDX measurement, the D is larger than 0.047.

[2] The electrode layer according to [1], wherein the D is 0.07 or more.

[3] The electrode layer according to [1] or [2], wherein the D is 0.50 or less.

[4] The electrode layer according to any one of [1] to [3], wherein

an oxygen amount of the electrode active material is 1.0 mass% or more and 10 mass% or less;
the electrode layer contains a solvent component; and
in Hansen solubility parameter (HSP), $\delta p$ of the solvent component is 6.0 $MPa^{0.5}$ or less.

[5] The electrode layer according to any one of [1] to [4], wherein

an oxygen amount of the electrode active material is 1.0 mass% or more and 10 mass% or less;
the electrode layer contains a solid electrolyte; and
in Hansen solubility parameter (HSP), $\delta p$ of the solid electrolyte is 10.0 $MPa^{0.5}$ or more and 15.0 $MPa^{0.5}$ or less.

[6] The electrode layer according to [5], wherein the solid electrolyte is a sulfide solid electrolyte.

[7] The electrode layer according to any one of [1] to [6], wherein the electrode active material is a porous.

[8] The electrode layer according to any one of [1] to [7], wherein the electrode active material includes a silicon clathrate type crystal phase.

[9] The electrode layer according to any one of [1] to [8], wherein the electrode active material is an anode active material.

[10] A battery comprising a cathode layer, an anode layer, and an electrolyte layer arranged between the cathode layer and the anode layer, wherein
the cathode layer or the anode layer is the electrode layer according to any one of [1] to [9].

[11] The battery according to [10], wherein the electrolyte layer contains a solid electrolyte.

Advantageous Effects of Disclosure

The present disclosure exhibits an effect such that an electrode layer of which resistance increase due to charge and discharge is little is obtained.

Brief Description of Drawings

FIG. 1 is a schematic cross-sectional view exemplifying the battery in the present disclosure.
FIG. 2 is a mapping image of Si.
FIGS. 3A and 3B are mapping images of Os.
FIG. 4 is an image overlapping the binarized image of Si and the binarized image of Os.
FIGS. 5A to 5C are images explaining the overlapping degree D of Si and Os.

Description of Embodiments

The electrode layer and the battery in the present disclosure will be hereinafter explained in details.

A. Electrode layer

The electrode layer in the present disclosure contains an electrode active material including a Si element, and a binder including an unsaturated bond. Also, when the binder is dyed by Os dyeing and then an overlapping degree D of the Si element and the Os element is calculated based on an element mapping image obtained by a SEM-EDX measurement, the D is in the specified range.

According to the present disclosure, the overlapping degree D is in the specified range, and thus the resistance increase of the electrode layer due to charge and discharge will be little. As described above, the theoretical capacity of Si is large and it is advantageous to allow a battery to have high energy density. On the other hand, the volume change of Si due to charge and discharge is large. When the volume change due to charge and discharge is large, when charge and discharge are repeated, the electrode active material and the other substance (such as a solid electrolyte or a conductive material) that contacts the electrode active material easily peel off. As a result, the battery resistance easily increases. In contrast, in the present disclosure, by arranging binders selectively a lot around the electrode active material including a Si element, the electrode active material and the other substance (such as a solid electrolyte or a conductive material) that contacts the electrode active material will not easily peel off due to the volume change of the electrode active material (Si) due to charge and discharge. As a result, an electrode layer of which resistance increase due to charge and discharge is little can be achieved.

In the present disclosure, to the cross-section of the electrode layer, Os dyeing is performed to dye a binder in the electrode layer. In specific, the unsaturated bond included in the binder is brought into reaction with $OsO_4$ (osmium oxide) to dye the binder. Further, an SEM-EDX measurement is performed to the cross-section of the electrode layer to obtain the element mapping image, and the overlapping degree D of the Si element and the Os element is calculated based on the obtained element mapping image. The overlapping degree D is an index based on so-called correlation coefficient. Details of the calculation method for the overlapping degree D will be described in Examples later. The overlapping degree D is usually larger than 0.047, may be 0.05 or more, may be 0.07 or more, may be 0.09 or more, may be 0.15 or more, and may be 0.20 or more. When the overlapping degree D is too low, there is a possibility that the resistance increase due to charge and discharge may not be sufficiently decreased. Meanwhile, the overlapping degree D is, for example, 0.50 or less, may be 0.40 or less, and may be 0.30 or less. Incidentally, in the present disclosure, the binder is dyed by Os dyeing, but for example, similar result can be obtained by dyeing the binder by known Ru dyeing.

1. Electrode active material

The electrode active material in the present disclosure includes an Si element. Examples of the electrode active

material may include a simple substance of Si, a Si alloy, a Si oxide, and a Si carbide. The Si alloy is an alloy mainly composed of Si. Examples of the metals other than Si in the Si alloy may include Na, W, Mo, Cr, V, Nb, Fe, Ti, Zr, and Hf. The Si alloy may contain a metal other than Si in just one kind, and may contain two or more kinds thereof. Examples of the Si oxide may include SiO. Also, examples of the Si carbide may include SiC.

The oxygen amount of electrode active material is not particularly limited, but for example, it is 1.0 mass% or more and 10 mass% or less. The oxygen amount of the electrode active material may be 3.0 mass% or more, and may be 5.0 mass% or more. Meanwhile, the oxygen amount of the electrode active material may be 9.0 mass% or less, may be 8.0 mass% or less, and may be 7.0 mass% or less. The oxygen amount of the electrode active material is typically an oxygen amount present on the surface of the electrode active material, and for example, it is a numerical value measured by an oxygen/nitrogen/hydrogen (ONH) analysis device. For example, when the electrode active material is washed by a hydrofluoric acid aqueous solution, hydrogen termination occurs on the surface of the electrode active material, and the oxygen amount on the surface of the electrode active material decreases.

The shape of the electrode active material is usually a granular shape. The electrode active material may be a primary particle, and may be a secondary particle which is aggregation of the primary particles. Also, the electrode active material is preferably porous (porous Si). In other words, the electrode active material preferably includes a void inside the primary particle. The rate of the void (void rate) in the primary particle is, for example, 4% or more, and may be 10% or more. Also, the void rate is, for example, 40% or less and may be 20% or less. The void rate can be obtained by, for example, in the following procedures. First, an ion milling processing is performed to the electrode layer including the electrode active material to take out the cross-section. Then, the cross-section is observed by a SEM (scanning electron microscope) to obtain a picture of particles. From the obtained picture, a silicon portion and the void portion are distinguished using an image analyzing software, and binarized. The areas of the silicon portion and the void portion are obtained, and the void rate (%) is calculated from the below equation:

Void rate (%) = 100 * (Area of void portion) / ((Area of silicon portion) + (Area of void portion)).

It is preferable that the electrode active material includes a lot of voids with the pore diameter of 5 nm or less. The void amount $P_1$ of the voids of which pore diameter is 5 nm or less is, for example, 0.015 cc/g or more, may be 0.020 cc/g or more, and may be 0.023 cc/g or more. Meanwhile, the void amount $P_1$ is, for example, 0.05 cc/g or less, may be 0.04 cc/g or less, and may be 0.035 cc/g or less. The void amount in the present disclosure means an integrating hole volume, and can be obtained by, for example, a BET measurement, a gas absorption method, a mercury porosimeter measurement, 3D-SEM, and 3D-TEM.

It is preferable that the electrode active material includes a lot of voids with the pore diameter of 10 nm or less. The void amount $P_2$ of the voids of which pore diameter is 10 nm or less is, for example, 0.030 cc/g or more, may be 0.035 cc/g or more, and may be 0.040 cc/g or more. Meanwhile, the void amount $P_2$ is, for example, 0.08 cc/g or less, may be 0.07 cc/g or less, and may be 0.06 cc/g or less. Also, the rate of the void amount $P_1$ with respect to the void amount $P_2$, which is $P_1/P_2$ is, for example, 50% or more, may be 55% or more, and may be 57% or more. Meanwhile, $P_1/P_2$ is, for example, 80% or less, may be 70% or less, and may be 65% or less.

It is preferable that the electrode active material includes a lot of voids with the pore diameter of 100 nm or less. The void amount $P_3$ of the voids of which pore diameter is 100 nm or less is, for example, 0.10 cc/g or more, may be 0.20 cc/g or more, and may be 0.32 cc/g or more. Meanwhile, the void amount $P_3$ is, for example, 0.50 cc/g or less, may be 0.45 cc/g or less, and may be 0.38 cc/g or less. Also, the rate of the void amount $P_1$ with respect to the void amount $P_3$, which is $P_1/P_3$ is, for example, 6.0% or more, may be 6.5% or more, and may be 6.9% or more. Meanwhile, $P_1/P_3$ is, for example, 15% or less, may be 12% or less, and may be 10% or less.

Examples of the method for producing the electrode active material that is porous may include a method in which an alloy of Li with Si (Li-Si alloy) is produced and then Li is removed from the Li-Si alloy. The Li-Si alloy may be obtained by, for example, mixing Li and Si. The rate of Li with respect to Si, which is Li/Si is, for example, 1.0 or more, may be 2.0 or more, may be 3.0 or more, and may be 4.0 or more. Meanwhile, Li/Si is, for example, 8.0 or less. Examples of the method for removing Li from the Li-Si alloy may include a method in which the Li-Si alloy is brought into reacting with Li extracting agent. Examples of the Li extracting agent may include alcohol such as methanol, ethanol, 1-propanol, 1-butanol, 1-pentanol, and 1-hexanol; and acid such as acetic acid, formic acid, propionic acid, and oxalic acid.

Other examples of the method for producing the electrode active material that is porous may include a method in which an alloy of Mg with Si (Mg-Si alloy) is produced, and then Mg is removed from the Mg-Si alloy. The Mg-Si alloy can be obtained by, for example, heating a mixture of Mg and Si. The rate of Mg with respect to Si, which is Mg/Si is, for example, 1.0 or more, may be 1.5 or more, and may be 2.0 or more. Meanwhile, Mg/Si is, for example, 6.0 or less. Examples of the method for removing Mg from the Mg-Si alloy may include a method in which Mg in the Mg-Si alloy is changed to MgO by heating the Mg-Si alloy in an inert gas atmosphere containing oxygen, and then MgO is removed by an acid solution. Examples of the acid solution may include an aqueous solution containing hydrochloric acid (HCl) and hydrogen fluoride

(HF).

The electrode active material may be crystalline, and may be amorphous. When the electrode active material is crystalline, the electrode active material usually includes a Si crystal phase. Examples of the Si crystal phase may include a diamond type crystal phase. Typical Si includes a diamond type crystal phase as the Si crystal phase. The electrode active material may contain a diamond type crystal phase as a main phase of the Si crystal phase.

Other examples of the Si crystal phase may include a silicon clathrate type crystal phase. The silicon clathrate type crystal phase may be a silicon clathrate I type crystal phase, and may be a silicon clathrate II type crystal phase. In the silicon clathrate type crystal phase, plurality of Si atoms form a polyhedron (cage) including pentagons or hexagons. This polyhedron has a space inside to include metal ions such as Li ions. The metal ions are intercalated to this space to inhibit the volume change due to charge and discharge. The electrode active material may include a silicon clathrate I type crystal phase, and may include a silicon clathrate II type crystal phase, as a main phase of the Si crystal phase. Examples of the method for producing the silicon clathrate type crystal phase may include a method in which a Na-Si alloy is produced by bringing Na and Si into reaction, and then Na is removed from the Na-Si alloy by burning the Na-Si alloy.

The average particle size ($D_{50}$) of the electrode active material is not particularly limited, and for example, it is 0.1 $\mu$m or more and 50 $\mu$m or less, and may be 0.5 $\mu$m or more and 30 $\mu$m or less. The average particle size ($D_{50}$) may be calculated from, for example, a measurement with a scanning electron microscope (SEM). Also, the BET specific surface area of the electrode active material is not particularly limited, and for example, it is 30 $m^2/g$ or more, may be 40 $m^2/g$ or more, may be 50 $m^2/g$ or more, and may be 60 $m^2/g$ or more. Meanwhile, the BET specific surface area of the electrode active material is, for example, 150 $m^2/g$ or less.

The electrode active material may or may not be covered with a coating layer containing a solid electrolyte. The solid electrolyte configuring the coating layer is not particularly limited, and examples thereof may include solid electrolytes described in "3. Solid electrolyte" later, and among those, a sulfide solid electrolyte is preferable. The coverage of the coating layer with respect to the electrode active material is, for example, 50% or more, may be 70% or more, and may be 90% or more. The thickness of the coating layer is, for example, 1 nm or more and 100 nm or less, may be 5 nm or more and 50 nm or less, and may be 10 nm or more and 30 nm or less.

The rate of the electrode active material in the electrode layer is, for example, 20 mass% or more, may be 30 mass% or more and may be 40 mass% or more. If the rate of the electrode active material is too little, there is a possibility that sufficient energy density may not be obtained. Meanwhile, the rate of the electrode active material in the electrode layer is, for example, 80 mass% or less, may be 70 mass% or less and may be 60 mass% or less. If the rate of the electrode active material is too much, there is a possibility that the ion conductivity and the electron conductivity in the electrode layer may be relatively degraded.

2. Binder

The binder includes an unsaturated bond. The unsaturated bond included in the binder is brought into reaction with $OsO_4$ (osmium oxide) and thereby the binder is dyed. The unsaturated bond is preferably an olefin unsaturated bond. The binder may include the unsaturated bond in a main chain, and may include the unsaturated bond in a side chain. Examples of the binder may include a butadiene rubber-based binder (BR-based binder) such as styrene-butadiene rubber (SBR), acrylonitrile-butadiene rubber (NBR), and butadiene rubber (BR); a styrene-based block copolymer such as a styrene-butadiene-styrene block copolymer (SBS), and a styrene-isoprene-styrene block copolymer (SIS); and an ethylene-propylene-diene copolymer (EPDM).

The rate of the binder in the electrode layer is, for example, 0.5 mass% or more, may be 1.0 mass% or more and may be 1.5 mass% or more. When the rate of the binder is too little, there is a possibility that the resistance increase due to charge and discharge may not be sufficiently decreased. Meanwhile, the rate of the binder in the electrode layer is, for example, 5 mass% or less, and may be 3 mass% or less. If the rate of the binder is too much, the rate of the electrode active material would be relatively little, and there is a possibility the energy density may decrease.

3. Solid electrolyte

The electrode layer may contain a solid electrolyte. By adding the solid electrolyte, ion conductivity of the electrode layer improves. The solid electrolyte may be an inorganic solid electrolyte such as a sulfide solid electrolyte, a halide solid electrolyte, an oxide solid electrolyte, and a complex hydride solid electrolyte; and an organic solid electrolyte such as a gel electrolyte. Among those, the solid electrolyte is preferably a sulfide solid electrolyte. The reason therefor is its high ion conductivity. The sulfide solid electrolyte is an electrolyte containing a S element as a main component of the anion component.

The sulfide solid electrolyte usually contains at least a Li element and, a S element. It is preferable that the sulfide solid electrolyte further contains an Me element (Me is at least one kind of P, As, Sb, Si, Ge, Sn, B, Al, Ga, and In). Also, the sulfide solid electrolyte may contain a halogen element such as F, Cl, Br, and I.

The sulfide solid electrolyte may be a glass-based (amorphous) sulfide solid electrolyte, may be a glass ceramic-based sulfide solid electrolyte, and may be a crystal-based sulfide solid electrolyte. The sulfide solid electrolyte may include a crystal phase. Examples of the crystal phase may include a Thio-LISICON type crystal phase, an argyrodite type crystal phase, and a LGPS type crystal phase.

There are no particular limitations on the composition of the sulfide solid electrolyte, and examples thereof may include $xLi_2S\cdot(1-x)P_2S_5(0.5\leq x<1)$, and $yLiI\cdot zLiBr\cdot(100-y-z)(xLi_2S\cdot(1-x)P_2S_5)(0.5\leq x<1, 0\leq y\leq 30, 0\leq z\leq 30)$. In these compositions, x preferably satisfies $0.7 \leq x \leq 0.8$. Also, other examples of the composition of the sulfide solid electrolyte may include $Li_{7-x}PS_{6-x}X_x$. X is at least one kind of F, Cl, Br and I, and x satisfies $0 \leq x < 2$. Also, other examples of the composition of the sulfide solid electrolyte may include $Li_{4-x}Me_{1-x}P_xS_4$ ($0 < x < 1$). Me is at least one kind of Al, Zn, In, Ge, Si, Sn, Sb, Ga and Bi.

The solid electrolyte has, in Hansen solubility parameter (HSP), δp (polar term) of, for example, 10.0 $MPa^{0.5}$ or more, it may be 12.0 $MPa^{0.5}$ or more, and may be 12.5 $MPa^{0.5}$ or more. Also, δp of the solid electrolyte is, for example, 15.0 $MPa^{0.5}$ or less. The δp (polar term) in Hansen solubility parameter can be obtained based on Hansen

Solubility Parameters: A user's handbook, Second Edition. Boca Raton, Fla: CRC Press. (Hansen, Charles (2007)).

The rate of the solid electrolyte in the electrode layer is, for example, 10 mass% or more, may be 20 mass% or more and may be 30 mass% or more. If the rate of the solid electrolyte is too little, there is a possibility that the ion conduction path in the electrode layer may be insufficient. Meanwhile, the rate of the solid electrolyte in the electrode layer is, for example, 60 mass% or less, and may be 50 mass% or less. If the rate of the solid electrolyte is too much, the rate of the electrode active material would be relatively little, and there is a possibility the energy density may decrease.

4. Conductive material

The electrode layer may contain a conductive material. By adding the conductive material, electron conductivity of the electrode layer improves. Examples of the conductive material may include a carbon material, a metal particle, and a conductive polymer. Examples of the carbon material may include a particulate carbon material such as acetylene black (AB) and Ketjen black (KB), and a fiber carbon material such as carbon fiber, carbon nanotube (CNT), and carbon nanofiber (CNF).

The rate of the conductive material in the electrode layer is, for example, 0.1 mass% or more, may be 0.5 mass% or more and may be 1.0 mass% or more. If the rate of the conductive material is too little, there is a possibility that the electron conduction path in the electrode layer may be insufficient. Meanwhile, the rate of the conductive material in the electrode layer is, for example, 5 mass% or less, and may be 3 mass% or less. If the rate of the conductive material is too much, the rate of the electrode active material would be relatively little, and there is a possibility the energy density may decrease.

5. Electrode layer

The electrode layer may contain a solvent component. The solvent component is, for example, a residue component of a solvent (dispersion medium) used during the production of the electrode layer. The solvent component preferably has low polarity. When the polarity of the solvent component is high, for example, dispersibility of the solid electrolyte may improve, but in the case the solvent component remains in the electrode layer, the remaining solvent component may deteriorate the solid electrolyte. Meanwhile, when the polarity of the solvent component is low, it is capable of preventing the remaining solvent component from deteriorating the solid electrolyte.

In Hansen solubility parameter (HSP), δp of the solvent component is, for example, 6.0 $MPa^{0.5}$ or less, may be 5.5 $MPa^{0.5}$ or less, may be 4.0 $MPa^{0.5}$ or less, may be 3.5 $MPa^{0.5}$ or less, may be 2.0 $MPa^{0.5}$ or less, may be 1.5 $MPa^{0.5}$ or less, and may be 1.0 $MPa^{0.5}$ or less. Meanwhile, the δp of the solvent component may be 0 $MPa^{0.5}$, and may be larger than 0 $MPa^{0.5}$. Examples of the solvent component may include tetralin, diisobutyl ketone, dodecane, isodecane, butyl butyrate, mesitylene, heptane, dibutyl ether, decane, and toluene.

The rate of the solvent component in the electrode layer is, for example, 10 ppm or more, may be 50 ppm or more, and may be 100 ppm or more. If the rate of the solvent component is too little, there is a possibility that the load of the step of drying the electrode layer may be large. Meanwhile, the rate of the solvent component in the electrode layer is, for example, 15000 ppm or less, may be 5000 ppm or less, and may be 500 ppm or less. If the rate of the solvent component is too much, there is a possibility that the formability of the electrode layer may be degraded. The rate of the solvent component in the electrode layer can be measured by, for example, a gas chromatography mass analysis meter (GC-MS) or a liquid chromatography mass analysis meter (LC-MS).

As described above, the electrode layer contains at least the electrode active material, and the binder including an unsaturated bond, and may further contain a solid electrolyte. In the present disclosure, there may be an organic compound including two or more of a benzene rings between the electrode active material and the solid electrolyte. Since

the chemical stability of the organic compound is high, deterioration (such as reduction decomposition, oxidation decomposition) of the solid electrolyte along with charge and discharge can be inhibited. As a result, the resistance increase due to charge and discharge can be further suppressed. In particular, it is preferable that the conjugate inside one benzene ring is present until outside the benzene ring (such as until the other benzene ring). Also, the organic compound may be dispersed in the binder present between the electrode active material and the solid electrolyte.

Examples of the organic compound including two or more of benzene rings may include compounds represented by the below general formula (1) or the below general formula (2).

[Chemical 1]

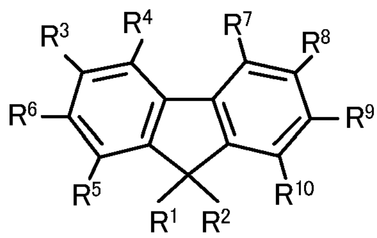

General formula (1)

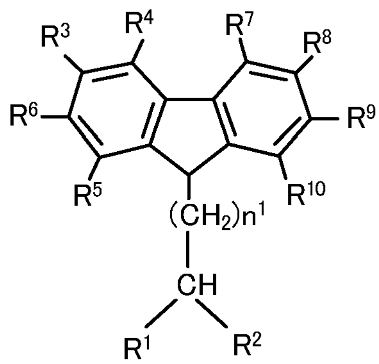

General formula (2)

(In the formula, $R^1$ and $R^2$ are each independently an organic group, $R^3$ to $R^{10}$ are each independently a hydrogen atom or a substituent, and $n^1$ is an integer of 0 to 4.)

Examples of the compound represented by the general formula (1) may include 9,9-Bis(4-glycidyloxyphenyl) fluorene represented by the below chemical formula (1).

[Chemical 2]

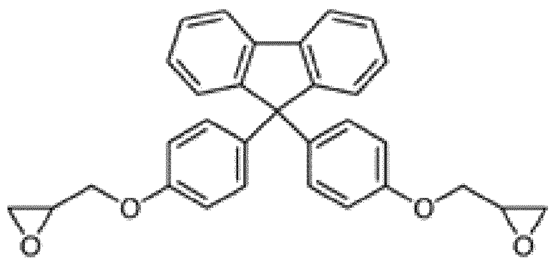

Chemical formula (1)

Additional examples of the organic compound including two or more of benzene rings may include a compound represented by the below general formula (3).

[Chemical 3]

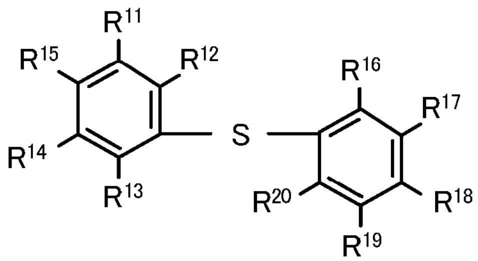

General formula (3)

(In the formula, S is a single bond or an organic group, $R^{11}$ to $R^{20}$ are each independently a hydrogen atom or a substituent.)

Examples of the compound represented by the general formula (3) may include 1,3-Diphenyl-2,3-epoxy-1-propanone represented by the below chemical formula (2).

[Chemical 4]

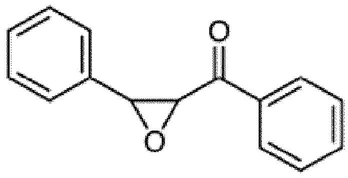

Chemical formula (2)

The electrode layer in the present disclosure is usually used for a battery. The electrode layer may be an anode layer and may be a cathode layer, but the former is preferable. The thickness of the electrode layer is, for example, 0.1 μm or more and 1000 μm or less, may be 0.1 μm or more and 500 μm or less, and may be 0.1 μm or more and 100 μm or less.

The method for producing the electrode layer is not particularly limited, but examples thereof may include a method including: a preparing step of preparing the electrode active material; a mixing step of mixing the electrode active material, the binder, and a solvent to obtain an electrode slurry; and an electrode layer forming step of forming an electrode layer using the electrode slurry. The present disclosure can also provide such a method for producing the electrode layer.

The preparing step is a step of preparing the electrode active material. The electrode active material is in the same contents as those described in "1. Electrode active material" above. Also, the mixing step is a step of mixing the electrode active material, the binder, and a solvent to obtain an electrode slurry. The solvent (a dispersion medium) is in the same contents as those described above. The present disclosure can also provide an electrode slurry containing the electrode active material, the binder, and the solvent.

The electrode layer forming step is a step of forming an electrode layer using the electrode slurry. There are no particular limitations on the method for forming the electrode layer, and known methods can be used. Examples of the method for forming the electrode layer may include a method in which the electrode slurry is applied on an electrode current collector and dried. On the occasion of forming the electrode layer, a pressing treatment of pressing the electrode layer in a thickness direction may be performed. Examples of the pressing treatment may include a roller pressing and a flat plate pressing.

B. Battery

FIG. 1 is a schematic cross-sectional view exemplifying the battery in the present disclosure. Battery 10 shown in FIG. 1 includes cathode layer 1, anode layer 2, electrolyte layer 3 arranged between the cathode layer 1 and the anode layer 2, cathode current collector 4 for collecting currents of the cathode layer 1, and anode current collector 5 for collecting currents of the anode layer 2. In the present disclosure, the cathode layer 1 or the anode layer 2 is the electrode layer described in "A. Electrode layer" above.

According to the present disclosure, usage of the above described electrode layer allows a battery to have less resistance increase due to charge and discharge. As described above, the electrode layer may be an anode layer and may be a cathode layer, but the former is preferable. Details of the battery when the electrode layer is the anode layer will be hereinafter explained.

1. Anode layer

The anode layer is a layer containing at least an anode active material. The anode layer is in the same contents as those described in "A. Electrode layer" above; thus, the descriptions herein are omitted.

2. Cathode layer

The cathode layer is a layer containing at least a cathode active material. Also, the cathode layer may contain at least one of an electrolyte, a conductive material, and a binder, as required.

Examples of the cathode active material may include an oxide active material. Examples of the oxide active material may include a rock salt bed type active material such as $LiCoO_2$, $LiMnO_2$, $LiNiO_2$, $LiVO_2$, and $LiNi_{1/3}CO_{1/3}Mn_{1/3}O_2$; a spinel type active material such as $LiMn_2O_4$, $Li_4Ti_5O_{12}$, and $Li(Ni_{0.5}Mn_{1.5})O_4$; and an olivine type active material such as $LiFePO_4$, $LiMnPO_4$, $LiNiPO_4$, and $LiCoPO_4$.

A coating layer containing Li-ion conductive oxide may be formed on the surface of the oxide active material. The reason therefor is to inhibit the reaction of the oxide active material and the solid electrolyte (particularly a sulfide solid electrolyte). Examples of the Li-ion conductive oxide may include $LiNbO_3$. The thickness of the coating layer is, for example, 1 nm or more and 30 nm or less. Also, as the cathode active material, for example, $Li_2S$ can be used.
Examples of the shape of the cathode active material may include a granular shape. The average particle size ($D_{50}$) of the cathode active material is not particularly limited, and for example, it is 10 nm or more, and may be 100 nm or more. Meanwhile, the average particle size ($D_{50}$) of the cathode active material is, for example, 50 $\mu$m or less, and may be 20 $\mu$m or less.
The electrolyte used for the cathode layer is in the same contents as those described in "3. Electrolyte layer". Also, the conductive material and the binder to be used for the cathode layer are in the same contents as those described in "A. Electrode layer" above; thus, the descriptions herein are omitted. The thickness of the cathode layer is, for example, 0.1 $\mu$m or more and 1000 $\mu$m or less, may be 0.1 $\mu$m or more and 500 $\mu$m or less, and may be 0.1 $\mu$m or more and 100 $\mu$m or less.

3. Electrolyte layer

The electrolyte layer is a layer formed between the cathode layer and the anode layer, and contains at least an electrolyte. The electrolyte may be a solid electrolyte and may be an electrolyte solution (liquid electrolyte).
The solid electrolyte is in the same contents as those described in "A. Electrode layer" above; thus, the descriptions herein are omitted. Meanwhile, the liquid electrolyte preferably contains a supporting salt and a solvent. Examples of the supporting salt (lithium salt) of the electrolyte including lithium ion conductivity may include an inorganic lithium salt such as $LiPF_6$, $LiBF_4$, $LiClO_4$, and $LiAsF_6$; and an organic lithium salt such as $LiCF_3SO_3$, $LiN(CF_3SO_2)_2$, $LiN(C_2F_5SO_2)_2$, $LiN(FSO_2)_2$, and $LiC(CF_3SO_2)_3$. Examples of the solvent used for the electrolyte may include a cyclic ester (cyclic carbonate) such as ethylene carbonate (EC), propylene carbonate (PC) and butylene carbonate (BC); and a chain ester (chain carbonate) such as dimethyl carbonate (DMC), diethyl carbonate (DEC), and ethyl methyl carbonate (EMC). It is preferable that the liquid electrolyte contains two kinds or more of the solvent.
The thickness of the electrolyte layer is, for example, 0.1 $\mu$m or more and 1000 $\mu$m or less, may be 0.1 $\mu$m or more and 500 $\mu$m or less, and may be 0.1 $\mu$m or more and 100 $\mu$m or less.

4. Other constitutions

The battery in the present disclosure preferably includes a cathode current collector for collecting currents of the cathode layer, and an anode current collector for collecting currents of the anode layer. Examples of the material for the cathode current collector may include SUS, aluminum, nickel, iron, titanium, and carbon. Meanwhile, examples of the material for the anode current collector may include SUS, copper, nickel, and carbon.
The battery in the present disclosure may further include a restraining jig that applies a restraining pressure along with the thickness direction of the cathode layer, the electrolyte layer and the anode layer. In particular, when the electrolyte layer is a solid electrolyte layer, it is preferable to apply a restraining pressure to form excellent ion conducting path and electron conducting path. The restraining pressure is, for example, 0.1 MPa or more, may be 1 MPa or more, and may be 5 MPa or more. Meanwhile, the restraining pressure is, for example, 100 MPa or less, may be 50 MPa or less, and may be 20 MPa or less.

5. Battery

The kind of the battery in the present disclosure is not particularly limited, but is typically a lithium ion battery. Also, the battery in the present disclosure may be a liquid battery in which the electrolyte layer contains a liquid electrolyte, and may be a solid state battery in which the electrolyte layer contains a solid electrolyte. The solid state battery may be a semisolid state battery and may be an all solid state battery. In the present disclosure, the semisolid state battery is a battery in which the electrolyte layer includes an inorganic solid electrolyte and a liquid component (such as ionic solution). In the present disclosure, the all solid state battery is a battery in which the electrolyte layer includes only the inorganic solid electrolyte as the electrolyte. Also, the battery in the present disclosure may be a primary battery and may be a secondary battery, but preferably a secondary battery among them. The reason therefor is to be repeatedly charged and discharged and useful as a car-mounted battery for example.
Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a

power source for electronic products such as information processing equipment.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Example 1]

<Production of electrode active material>

Metal Li and Si powder were weighed so as to be 4 : 1 in the molar ratio, and brought into reaction by mixing with a mortar in the conditions of under an Ar atmosphere, at a room temperature, and for 0.5 hours. Thereby, $Li_4Si$ was obtained. The obtained $Li_4Si$ was brought into reaction with ethanol under an Ar atmosphere. The obtained reaction product was considered to include Si and $CH_3CH_2OLi$. This reaction product was filtrated, and the filtrated solid content was dried at 120°C for 3 hours or more to obtain powder porous Si.

A Na-Si alloy was produced using the obtained porous Si, and using NaH as a Na source. Incidentally, as the NaH, the one washed by hexane in advance was used. The NaH and the porous Si were weighed so as to be 1.05 : 1 in the molar ratio, and mixed using a cutter mill. The mixture of the NaH and the porous Si was heated in the conditions of under an Ar atmosphere, at 475°C and for 40 hours in a heating furnace to obtain a powder Na-Si alloy.

A silicon clathrate was generated by a solid phase method using the obtained Na-Si alloy, and further using $AlF_3$ as a Na trapping agent. The Na-Si alloy and the $AlF_3$ were weighed so as to be 1 : 0.35 in the molar ratio, and mixed using a cuter mill to obtain a reaction raw material. The obtained powder reaction raw material was put in a reaction container made of stainless steel, and brought into reaction by heating in the conditions of under an Ar atmosphere, at 310°C and for 60 hours in a heating furnace to obtain a precursor active material.

The obtained precursor active material was considered to include NaF and Al as by-products. Then, the precursor active material was washed using a mixture solvent in which $HNO_3$ and $H_2O$ were mixed in the volume ratio of 10 : 90. Thereby, the by-products in the reaction product were eliminated. After washing, filtrated and separated solid content was dried at 120°C for 3 hours or more to obtain an electrode active material.

<Production of anode>

The obtained electrode active material, a sulfide solid electrolyte ($Li_2S$-$P_2S_5$-based glass ceramic), a conductive material (VGCF), a tetralin solution containing a binder (BR-based binder) in the rate of 5 mass%, and tetralin were added to a container made of polypropylene, and agitated for 30 seconds by an ultrasonic dispersion device (UH-50 from SMT Corporation). Next, the container was shaken for 30 minutes by a shaker (TTM-1 from SIBATA SCIENTIFIC TECHNOLOGY LTD.) to obtain an anode slurry. The ratio of the electrode active material, the sulfide solid electrolyte, the conductive material and the binder were, the electrode active material : the sulfide solid electrolyte : the conductive material : the binder = 51.27 : 42.7 : 0.77 : 2.89 in the mass ratio. Also, the solid concentration of the slurry was 31 mass%. The obtained anode slurry was applied on an anode current collector (Cu foil from UACJ) by a blade method using an applicator, and dried on a hot plate at 100°C for 30 minutes. Thereby, an anode including an anode current collector and an anode layer was obtained.

<Production of cathode>

A cathode active material ($LiNi_{1/3}CO_{1/3}Mn_{1/3}O_2$; average particle size 6 μm), a sulfide solid electrolyte ($Li_2S$-$P_2S_5$-based glass ceramic), a conductive material (VGCF), a butyl butyrate solution containing a PVDF-based binder in the rate of 5 mass%, and butyl butyrate were added to a container made of polypropylene, and agitated for 30 seconds by an ultrasonic dispersion device (UH-50 from SMT Corporation). Next, the container was shaken for 3 minutes by a shaker (TTM-1 from SIBATA SCIENTIFIC TECHNOLOGY LTD.), further agitated by the ultrasonic dispersion device for 30 seconds, and then shaken for 3 minutes by the shaker to obtain a cathode slurry. The obtained cathode slurry was applied on a cathode current collector (Al foil from SHOWA DENKO K.K) by a blade method using an applicator, and dried on a hot plate at 100°C for 30 minutes. Thereby, a cathode including a cathode current collector and a cathode layer was obtained. Incidentally, the area of the cathode was made smaller than the area of the anode.

<Production of solid electrolyte layer>

A sulfide solid electrolyte ($Li_2S$-$P_2S_5$-based glass ceramic), a heptane solution containing a BR-based binder in the rate of 5 mass%, and heptane were added to a container made of polypropylene, and agitated for 30 seconds by an ultrasonic dispersion device (UH-50 from SMT Corporation). Next, the container was shaken for 30 minutes by a shaker (TTM-1 from SIBATA SCIENTIFIC TECHNOLOGY LTD.) to obtain a slurry. The obtained slurry was applied on a peeling sheet (Al foil) by a blade method using an applicator, and dried on a hot plate at 100°C for 30 minutes. Thereby, a transfer member including the peeling sheet and the solid electrolyte layer was obtained.

<Production of all solid state battery>

A solid electrolyte layer for bonding was arranged on the cathode layer in the cathode, and installed to a roll-pressing machine, then pressed at 100 kN/cm and 165°C. Thereby, a first layered body was obtained. Next, the anode was installed to the roll-pressing machine and pressed at 60 kN/cm and 25°C. Thereby, a pressed anode was obtained. After that, from the anode layer side, arranged were in the order of the solid electrolyte layer for bonding and the transfer member. On this occasion, the solid electrolyte layer for bonding and the solid electrolyte layer in the transfer member were arranged so as to face to each other. The obtained layered body was installed to a plane uniaxial pressing machine and provisionally pressed at 100 MPa and 25°C for 10 seconds. After that, the peeling sheet was peeled off from the solid electrolyte layer. Thereby, a second layered body was obtained. Next, the solid electrolyte layer for bonding in the first layered body and the solid electrolyte layer in the second layered body were arranged so as to face to each other, installed to a plane uniaxial pressing machine, and pressed at 200 MPa and 120°C for 1 minute. Thereby, an all solid state battery was obtained.

[Example 2]

An all solid state battery was obtained in the same manner as in Example 1 except that diisobutyl ketone was used instead of tetralin during the production of the anode slurry.

[Example 3]

An electrode active material (anode active material) was obtained in the same manner as in Example 1, except that after drying at 120°C for 3 hours or more, liquid treated for 1 hour using a HF aqueous solution, filtrated and separated solid content was dried at 120° C for 3 hours or more. Also, a sulfide solid electrolyte ($Li_2S$-$P_2S_5$-based glass ceramic) was soaked in a tetralin solution containing a binder (Br-based binder) in a rate of 5 mass% for 1 hour, and dried to obtain a sulfide solid electrolyte including a coating layer on the surface. An all solid state battery was obtained in the same manner as in Example 1 except that the obtained electrode active material (anode active material) and the obtained sulfide solid electrolyte were used during the production of the anode slurry.

[Comparative Example 1]

An electrode active material (anode active material) was obtained in the same manner as in Example 1, except that after drying at 120°C for 3 hours or more, liquid treated for 1 hour using a HF aqueous solution, filtrated and separated solid content was dried at 120° C for 3 hours or more. An all solid state battery was obtained in the same manner as in Example 1 except that the obtained electrode active material (anode active material) was used during the production of the anode slurry, and the usage amount of the binder was changed to 1.14 times.

[Evaluation]

<SEM observation>

The electrode active materials obtained in Examples 1 and 3 were observed by a scanning electron microscope (SEM). As a result, it was confirmed that the electrode active material was porous and included voids inside the primary particle.

<XRD measurement>

An X-ray diffraction (XRD) measurement using CuK$\alpha$ ray was respectively performed to the electrode active materials obtained in Examples 1 and 3. As a result, it was confirmed that the electrode active materials had the silicon

clathrate II type crystal phase as a main phase.

<Overlapping degree of Si element and Os element>

Cross-section processing was performed to the anode layers in the all solid state batteries obtained in Examples 1 to 3 and Comparative Example 1, and the cross-sections of the anode layers were dyed using a vacuum electron dyeing device (VSC4TWDH). In specific, treatment was performed for 5 hours using 5 volume% $OsO_4$/naphthalene, and dyeing with $OsO_4$ was performed. After dyeing, a SEM-EDX measurement was performed to the cross-sections of the anode layers, and mapping images of Si and Os were respectively obtained. The measurement conditions were 1000 times of EDX magnification, 5 kV of acceleration voltage, and 60 seconds of the measurement time. The mapping image was targeted for the region of 50 μm * 50 μm or more.

The obtained mapping images were digitalized utilizing OpenCV, and noises were eliminated using Gaussian filter. FIG. 2 is a mapping image of Si, and noises of this mapping image were eliminated, and then binarized image was obtained. Also, FIG. 3A is a mapping image of Os, and noises of this mapping image were eliminated, and then binarized image was obtained. Incidentally, FIG. 3B is the binarized image of Os. Next, as shown in FIG. 4, by overlapping the binarized image of Si and the binarized image of Os, a synthesized image for evaluating the overlapping degree of Si and Os was obtained. Incidentally, in FIG. 4, the part where Si and Os are overlapping and accumulated a lot is shown brightly.

After that, the overlapping degree D was calculated using the obtained synthesized image. In specific, the correlation coefficient of Si and Os was calculated per pixel (1280 * 960), and thereby the correlation coefficient (overlapping degree D) in the entire image was obtained. The calculation of the correlation coefficient was performed by a known image processing software. For reference, as shown in FIGS. 5A to C, Si is represented by a net pattern, and Os is represented by a dot pattern. As shown in FIG. 5A, when Si and Os are in complete match, the correlation coefficient is 1. Incidentally, as shown in the right side of FIG. 5A, the region where Si nor Os is present is not counted. Meanwhile, as shown in FIG. 5B, when Si and Os are not in complete match, the correlation coefficient is -1. Also, as shown in FIG. 5C, when Si and Os match in half of the whole region, and only Si or only Os is present in the rest of the half, the correlation coefficient is 0.

<Oxygen amount measurement>

The oxygen amount of the electrode active materials produced in Examples 1 and 3 was respectively obtained using an oxygen/nitrogen/hydrogen (ONH) analysis device (EMGA-930, from HORIBA, Ltd.). The results are shown in Table 1.

<Resistance increase rate measurement>

A charge and discharge test was conducted for the all solid state batteries obtained in Examples 1 to 3 and Comparative Example 1. In specific, first, the batteries were CCCV charged at 0.1 C until 4.55 V, and then discharged at 1 C until 3.0 V. Next, after charged until 3.9 V, charged at 0.1 C until 3.7 V, discharged for 5 seconds at 14.7 mA, and the initial resistance was obtained from the value of the voltage drop. Next, charge and discharge operation of CCCV charge at 1/3 C until 4.35 V and CCCV discharge at 1/3 C until 3.0 V was repeated for 100 times. After that, the resistance after the charge and discharge was obtained in the same manner as the above. The difference between the resistance after the charge and discharge and the initial resistance was obtained as a resistance increase amount. The results are shown in Table 1. Incidentally, the resistance increase amount in Table 1 is the relative value when the result of Comparative Example 1 is regarded as 100.

[Table 1]

| | Si oxygen amount (mass%) | $\delta$ p of solvent ($MPa^{0.5}$) | $\delta$ p of SE ($MPa^{0.5}$) | Binder amount (Relative value) | Overlapping degree D | Resistance increase amount (Relative value) |
|---|---|---|---|---|---|---|
| Comp. Ex. 1 | 5 | 0.2 | 13.5 | 1.14 | 0.047 | 100 |
| Example 1 | 9 | 0.2 | 13.5 | 1.00 | 0.076 | 98.3 |
| Example 2 | 9 | 5.4 | 13.5 | 1.00 | 0.174 | 86.2 |
| Example 3 | 5 | 0.2 | 12.0 | 1.00 | 0.234 | 55.7 |

As shown in Table 1, it was confirmed that the overlapping degree D of the Si element and the Os element of Examples 1 to 3 was respectively larger than that of Comparative Example 1, and the resistance increase amount decreased. In particular, the resistance increase amount of Example 3 was approximately half of that of Comparative Example 1. This is presumably because the cutting of path along with the volume change of the electrode active material due to charge and discharge was inhibited by binders arranged a lot around the electrode active material (Si). Also, it was suggested that the overlapping degree D can be controlled by the polarity (oxygen amount) of the surface of the electrode active material (Si), the polarity of the solvent (dispersion medium) used for the slurry, the polarity of the solid electrolyte, and the amount of the binder.

In the present disclosure, as in Example 1, the combination of, oxygen amount of the electrode active material being around 9 mass% (7 mass% to 11 mass%), $\delta p$ of the solvent component being around 0.2 $MPa^{0.5}$ (0 $MPa^{0.5}$ to 1.0 $MPa^{0.5}$, particularly 0 $MPa^{0.5}$ to 0.5 $MPa^{0.5}$), and $\delta p$ of the solid electrolyte being around 13.5 $MPa^{0.5}$ (12.5 $MPa^{0.5}$ to 15.0 $MPa^{0.5}$), may be adopted.

Further, in the present disclosure, as in Example 2, the combination of, oxygen amount of the electrode active material being around 9 mass% (7 mass% to 11 mass%), $\delta p$ of the solvent component being around 5.4 $MPa^{0.5}$ (4.4 $MPa^{0.5}$ to 6.4 $MPa^{0.5}$, particularly 4.9 $MPa^{0.5}$ to 5.9 $MPa^{0.5}$), and $\delta p$ of the solid electrolyte being around 13.5 $MPa^{0.5}$ (12.5 $MPa^{0.5}$ to 15.0 $MPa^{0.5}$), may be adopted.

Furthermore, in the present disclosure, as in Example 3, The combination of, oxygen amount of the electrode active material being around 5 mass% (3 mass% to 7 mass%), $\delta p$ of the solvent component being around 0.2 $MPa^{0.5}$ (0 $MPa^{0.5}$ to 1.0 $MPa^{0.5}$, particularly 0 $MPa^{0.5}$ to 0.5 $MPa^{0.5}$), and $\delta p$ of the solid electrolyte being around 12.0 $MPa^{0.5}$ (10.0 $MPa^{0.5}$ to 14.0 $MPa^{0.5}$), may be adopted.

Reference Sings List

| | |
|---|---|
| 1 | cathode layer |
| 2 | anode layer |
| 3 | electrolyte layer |
| 4 | cathode current collector |
| 5 | anode current collector |
| 10 | battery |

## Claims

1. An electrode layer **characterized by** comprising an electrode active material including a Si element, and a binder including an unsaturated bond, wherein
when the binder is dyed by Os dyeing and then an overlapping degree D of the Si element and the Os element is calculated based on an element mapping image obtained by a SEM-EDX measurement, the D is larger than 0.047.

2. The electrode layer according to claim 1, **characterized in that** the D is 0.07 or more.

3. The electrode layer according to claim 1, **characterized in that** the D is 0.50 or less.

4. The electrode layer according to claim 1, **characterized in that**

    an oxygen amount of the electrode active material is 1.0 mass% or more and 10 mass% or less;
    the electrode layer contains a solvent component; and
    in Hansen solubility parameter (HSP), $\delta p$ of the solvent component is 6.0 $MPa^{0.5}$ or less.

5. The electrode layer according to claim 1, **characterized in that**

    an oxygen amount of the electrode active material is 1.0 mass% or more and 10 mass% or less;
    the electrode layer contains a solid electrolyte; and
    in Hansen solubility parameter (HSP), $\delta p$ of the solid electrolyte is 10.0 $MPa^{0.5}$ or more and 15.0 $MPa^{0.5}$ or less.

6. The electrode layer according to claim 5, **characterized in that** the solid electrolyte is a sulfide solid electrolyte.

7. The electrode layer according to claim 1, **characterized in that** the electrode active material is porous.

**8.** The electrode layer according to claim 1, **characterized in that** the electrode active material includes a silicon clathrate type crystal phase.

**9.** The electrode layer according to claim 1, **characterized in that** the electrode active material is an anode active material.

**10.** A battery comprising a cathode layer, an anode layer, and an electrolyte layer arranged between the cathode layer and the anode layer, **characterized in that**
the cathode layer or the anode layer is the electrode layer according to any one of claim 1 to claim 9.

**11.** The battery according to claim 10, **characterized in that** the electrolyte layer contains a solid electrolyte.

FIG. 1

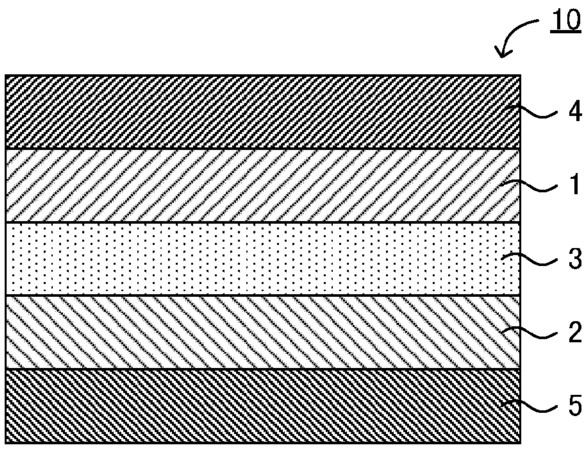


FIG. 2

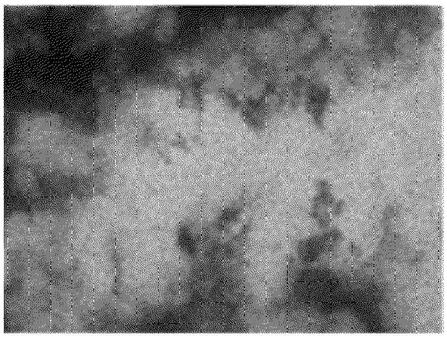

FIG. 3A

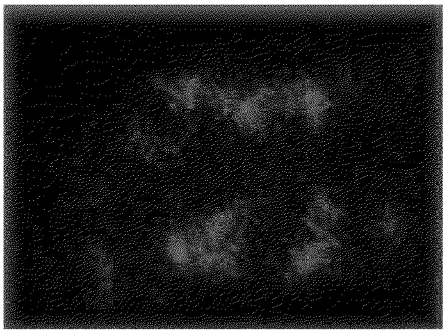

FIG. 3B

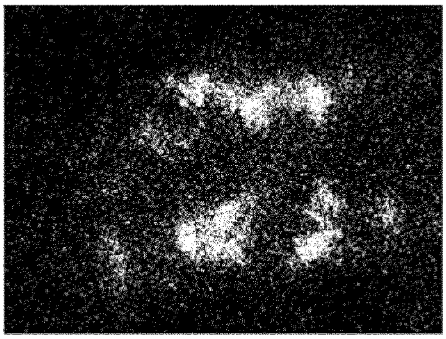

FIG. 4

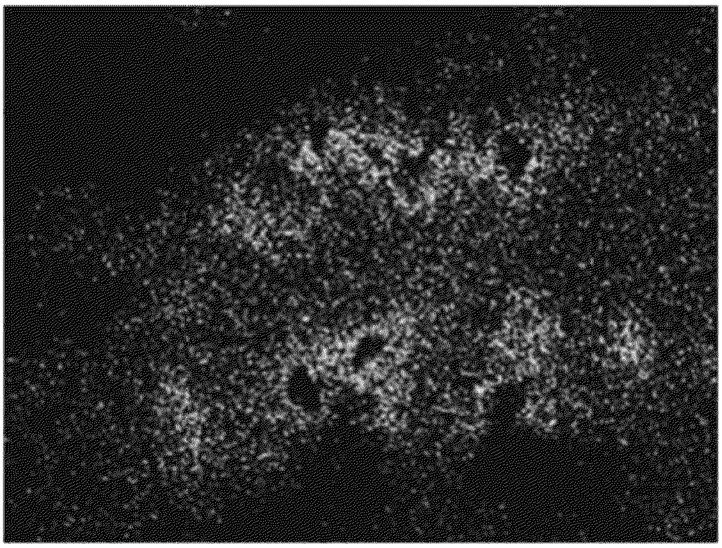

FIG. 5A

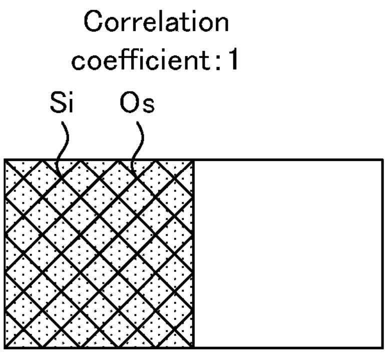


FIG. 5C

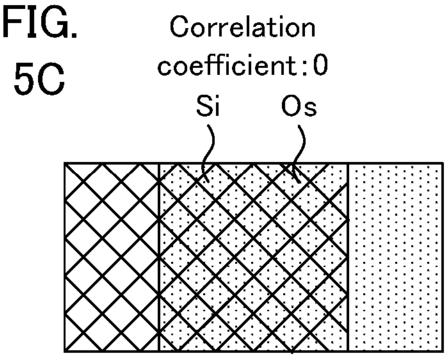


FIG. 5B

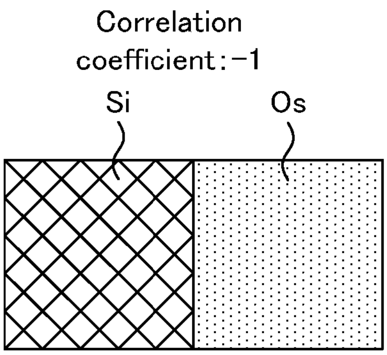

Europäisches Patentamt
European Patent Office
Office européen des brevets

# EUROPEAN SEARCH REPORT

Application Number
EP 25 18 9616

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 605 664 A1 (TOYOTA MOTOR CO LTD [JP]) 5 February 2020 (2020-02-05) * paragraphs [0029], [0042], [0054], [0056], [0072] * ----- | 1-3,6,7, 9-11 | INV. H01M4/134 H01M4/38 |
| X | EP 3 595 056 A1 (TOYOTA MOTOR CO LTD [JP]) 15 January 2020 (2020-01-15) * paragraphs [0042], [0046], [0057], [0077] * ----- | 1-3,6, 8-11 | |
| X,P | EP 4 462 507 A1 (TOYOTA MOTOR CO LTD [JP]) 13 November 2024 (2024-11-13) * paragraphs [0023] - [0025], [0032], [0035] - [0036], [0042], [0080] - [0082] * ----- | 1-6,8-11 | |

TECHNICAL FIELDS SEARCHED (IPC)

H01M

The present search report has been drawn up for all claims

1

| Place of search | Date of completion of the search | Examiner |
|---|---|---|
| Munich | 3 December 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 18 9616

This annex lists the patent family members relating to the patent documents cited in the above-mentioned European search report. The members are as contained in the European Patent Office EDP file on
The European Patent Office is in no way liable for these particulars which are merely given for the purpose of information.

03-12-2025

| Patent document cited in search report | Publication date | Patent family member(s) | Publication date |
|---|---|---|---|
| EP 3605664 A1 | 05-02-2020 | BR 102019015348 A2 | 18-02-2020 |
| | | CN 110797567 A | 14-02-2020 |
| | | EP 3605664 A1 | 05-02-2020 |
| | | JP 7251069 B2 | 04-04-2023 |
| | | JP 2020021674 A | 06-02-2020 |
| | | KR 20200015384 A | 12-02-2020 |
| | | RU 2713231 C1 | 04-02-2020 |
| | | US 2020044284 A1 | 06-02-2020 |
| EP 3595056 A1 | 15-01-2020 | CN 110718682 A | 21-01-2020 |
| | | EP 3595056 A1 | 15-01-2020 |
| | | JP 7025296 B2 | 24-02-2022 |
| | | JP 2020013650 A | 23-01-2020 |
| | | KR 20200007680 A | 22-01-2020 |
| | | US 2020020936 A1 | 16-01-2020 |
| EP 4462507 A1 | 13-11-2024 | CN 118943314 A | 12-11-2024 |
| | | EP 4462507 A1 | 13-11-2024 |
| | | JP 2024162152 A | 21-11-2024 |
| | | KR 20240162996 A | 18-11-2024 |
| | | US 2024379950 A1 | 14-11-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023167083 A


### Non-patent literature cited in the description


- **HANSEN, CHARLES**. Solubility Parameters: A user's handbook. CRC Press, 2007